# EUROPEAN PATENT SPECIFICATION

(11) **EP 1 103 339 B1**
(45) Date of publication and mention of the grant of the patent: **18.02.2004**
(21) Application number: 00114207.4
(22) Date of filing: 03.07.2000
(51) Int. Cl.: B23Q 1/26, B23Q 39/02, B23Q 37/00, B23Q 5/32, B23Q 5/34, B23Q 5/26, B23B 39/16, B23Q 1/28

(54) **Drilling assembly for panel milling and drilling machines**
Bohreinrichtung für Maschine zum Fräsen und Bohren von Platten
Ensemble de forage pour machines de fraisage et forage de plaques

(30) Priority: 23.11.1999 IT MI992447
(43) Date of publication of application: 30.05.2001
(73) Proprietor: Alberti Vittorio S.p.A., 20063 Cernusco sul Naviglio, Milano (IT)
(72) Inventor: Alberti, Luigi, 20063 Cernusco sul Naviglio (IT)
(74) Representative: Cicogna, Franco

(56) References cited:
- DE-A- 4 016 480
- DE-A- 19 829 814
- US-A- 3 977 804

## Description

### BACKGROUND OF THE INVENTION

The present invention relates to a drilling assembly, specifically designed for panel milling and drilling machines.

As is known, panel milling and drilling machines conventionally comprise a drilling assembly, including a plurality of mandrels for performing a vertical drilling and mandrels for performing a horizontal drilling, said mandrels being very complex construction-wise since they must perform a series of intricate movements for assuming their proper operating positions.

Another problem is that of the location stability of the mandrels which, in the prior art machine, (see, for example, DE-19829814-A), is very difficult to achieve.

Thus, prior machines of the above mentioned type frequently provide a poor machining.

### SUMMARY OF THE INVENTION

Accordingly, the aim of the present invention is to overcome the above mentioned drawbacks, by providing a drilling assembly, specifically designed for panel milling and drilling machines, allowing to firmly and safely locate the operating mandrels thereof, thereby providing a very good machining quality.

Within the scope of the above mentioned aim, a main object of the present invention is to provide such a drilling assembly including very simple means for locking the operating mandrels in their set operating positions.

Another object of the present invention is to provide such a drilling assembly which, owing to its peculiar constructional features, is very reliable and safe in operation.

Yet another object of the present invention is to provide such a drilling assembly which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a drilling assembly specifically designed for panel, milling and drilling machines, comprising a plurality of vertical drilling mandrels and horizontal drilling mandrels, characterized in that each said vertical drilling mandrels comprises a slotted shaft slidably engaged with a driving gear.

The slotted shaft, moreover, is coupled, at a bottom portion thereof, to a drill holding mandrel and, at a top portion thereof, to an expanding piston for removably locking the drill holding mandrel at a lowered working position thereof.

### BRIEF DESCRIPTION OF THE DRAWINGS

Further characteristics and advantages of the present invention will become more apparent hereinafter from the following detailed disclosure of a preferred, though not exclusive, embodiment of a drilling assembly specifically designed for panel milling and drilling machines, and being illustrated, by way of an indicative, but not limitative, example in the figures of the accompanying drawings, where:

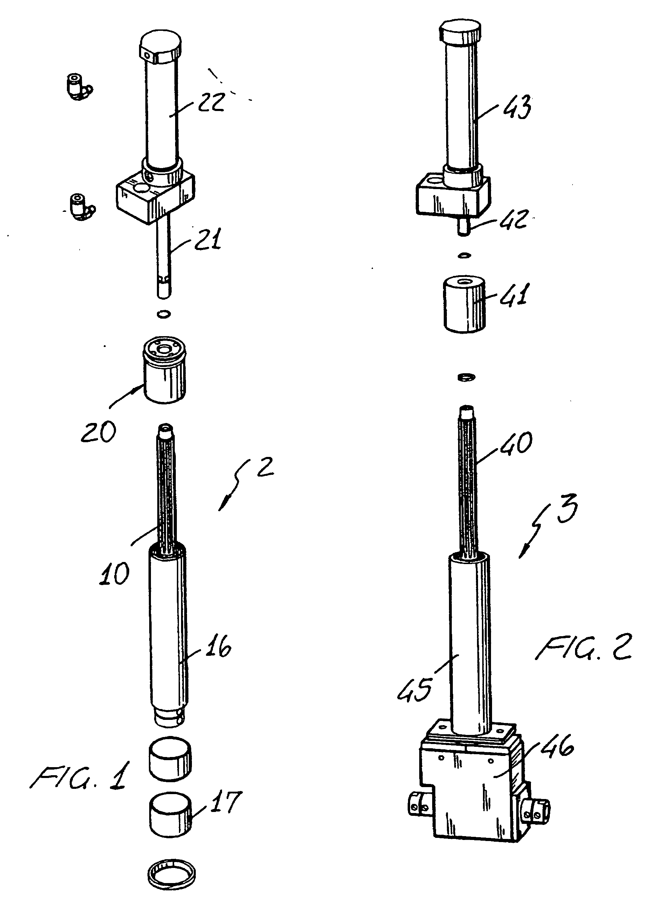

Figure 1 is a schematic exploded perspective view illustrating a vertical drilling mandrel;
Figure 2 illustrates a further schematic exploded perspective view of a horizontal drilling mandrel;

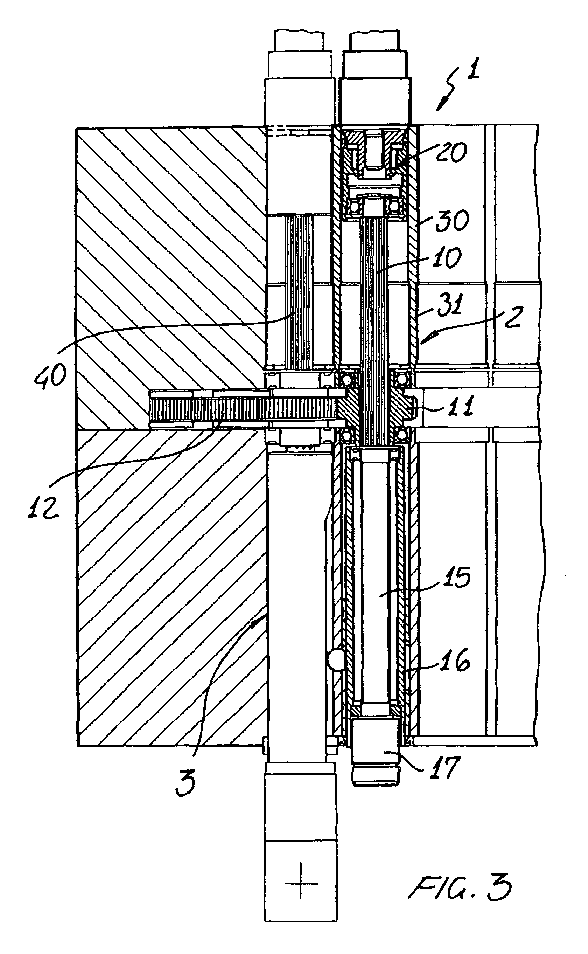

Figure 3 is a cross-sectional view illustrating a vertical drilling mandrel in a rest condition thereof;

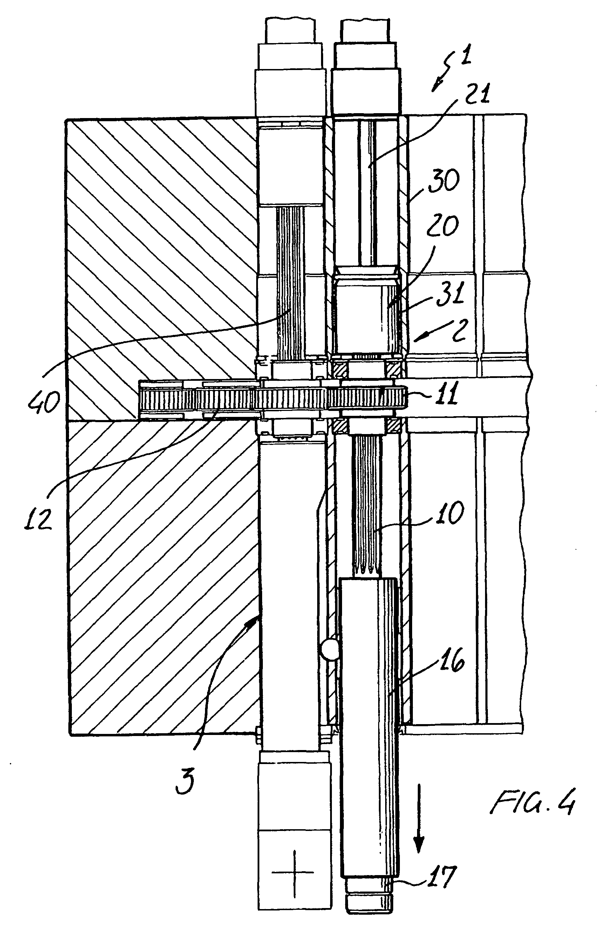

Figure 4 illustrates a vertical drilling mandrel in an working position thereof;

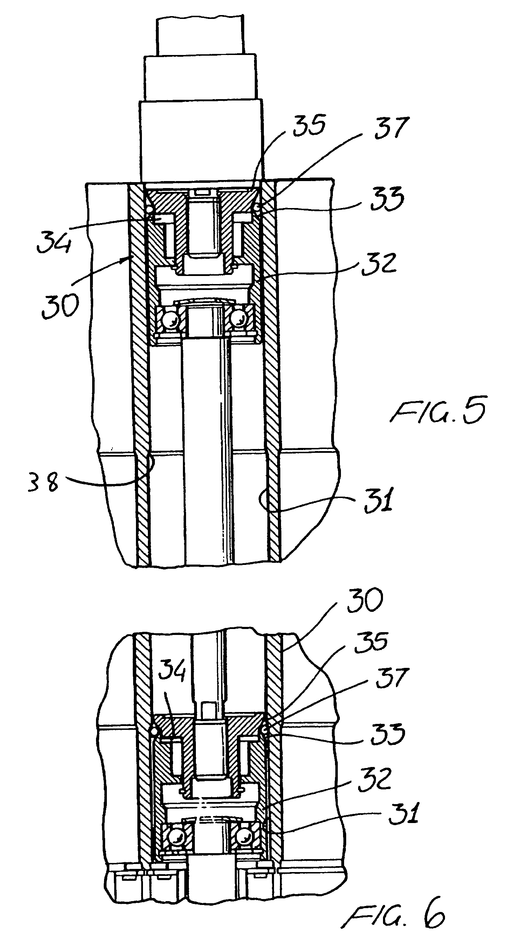

Figure 5 is a schematic cross-sectional view illustrating the expanding piston associated with the vertical drilling mandrel, in a rest or stand-by condition thereof;

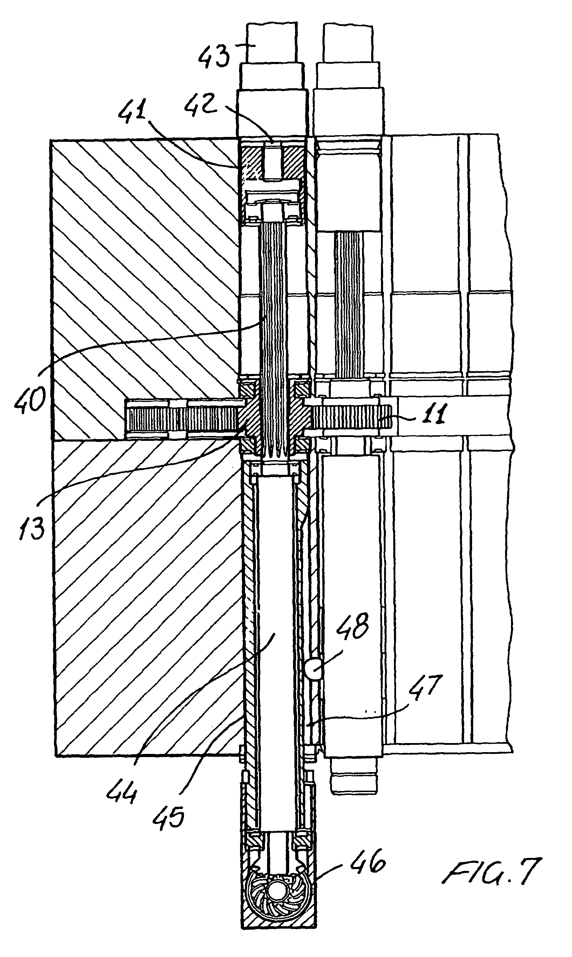

Figure 6 is further cross-sectional view illustrating the expanding piston and vertical drilling mandrel in a working position thereof;

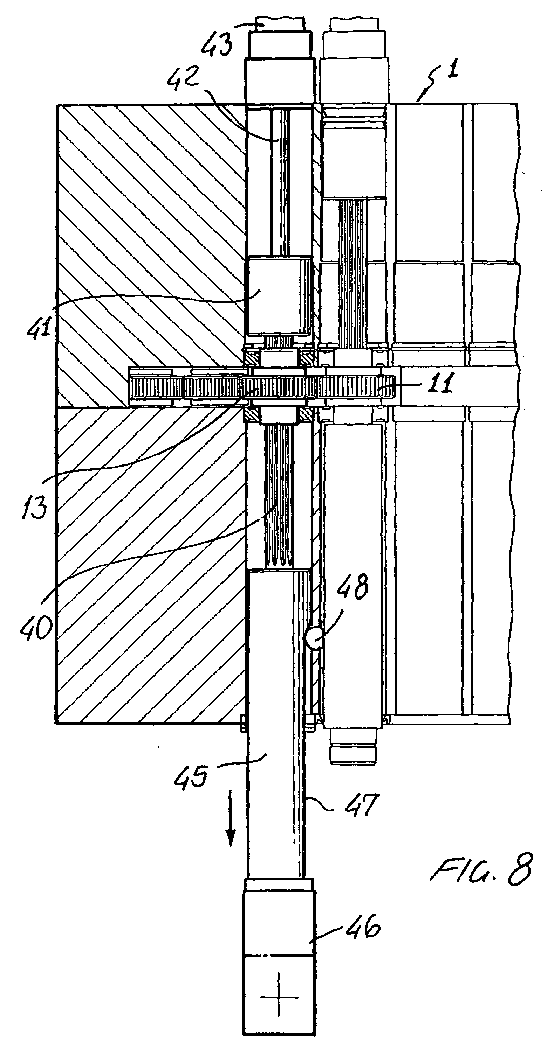

Figure 7 is a further schematic cross-sectional view illustrating the horizontal drilling mandrel in a rest or stand-by position thereof;
Figure 8 illustrates the horizontal drilling mandrel in a working position thereof; and
Figure 9 is a cross-sectional view illustrating a detail of the horizontal drill holding mandrel.

### DESCRIPTION OF THE PREFERRED EMBODIMENTS

With reference to the number references of the above mentioned figures, the drilling assembly, specifically designed for panel milling and drilling machines, which has been generally indicated by the reference number 1, comprises a plurality of vertical drilling mandrels 2 and at least a horizontal drilling mandrel 3.

Each vertical drilling mandrel 2 comprises, in turn, a slotted or splined shaft 10, which is slidably engaged inside a driving gear 11, the latter being coupled to a kinematic gear chain 12 taking the drive from a driving motor (not specifically shown).

The splined or slotted shaft 10, which can slide with respect to the driving gear 11, is coupled, at its bottom portion, through a vertical shaft or spindle 15, which can turn inside a first bushing 16, with a drill holding mandrel 17.

At the top thereof, the splined or slotted shaft 10 is coupled to an expanding piston 20 which, by a piston rod 21, is coupled to a driving cylinder 22 provided for driving the vertical drilling mandrel.

The expanding piston is adapted to slide through a first vertical sleeve 30 which, at the bottom portion thereof, on the side of the driving gear 11, is provided with an enlarged portion 31.

As shown, the expanding piston 20 comprises a piston body 32 coupled to the splined shaft, ending with a conical tapering portion 33 encompassing a guide 34 in which a counter-conic element 35 can be engaged, which counter-conic element is coupled to the piston rod 21 and delimiting, in combination with a further conical tapering portion 33, a groove in which a split ring 37 is engaged.

Thus, as the vertical drilling mandrel is caused to be lowered, said counter-conic element 35 will provide a pushing force.

As the expanding piston 20 is arranged at the enlarged portion 31, the split ring 37 will be radially expanded, to engage in a locked manner in the shoulder 38 defined between the first sleeve 30 and said enlarged portion 31.

Said locking will prevent the pushing force affecting the vertical drilling drill, to cause the vertical mandrel to be raised again during a drilling operation, thereby said mandrel will be firmly held in its set position.

At the completion of the drilling operation, on the other hand, the mentioned mandrel can be raised again since the piston rod 21, by recovering the counter-conic element 35 to its starting position, will allow the split ring 37 to radially contract, thereby allowing in turn the expanding piston 20 to be raised again.

The horizontal drilling mandrel, as shown, is provided with a second slotted or splined shaft 40, also slidably engaged with one of the driving gears, indicated by the reference number 13, included in the provided gear chain.

Said second slotted or splined shaft 40 is coupled, at the top thereof to a coupling body 41, for coupling to a second piston rod 42 in turn connected to a horizontal drilling cylinder 43.

At the bottom thereof the splined shaft 40 is coupled to a driving shaft 44 which can turn inside a second bushing 45 which, at the bottom thereof, is coupled to a horizontal drilling head 46.

The bushing 45 is provided with a flat portion 47 therewith is engaged a tempered pin 48 provided for stopping the lowering movement of the horizontal drilling mandrel, thereby allowing a very stable position to be obtained.

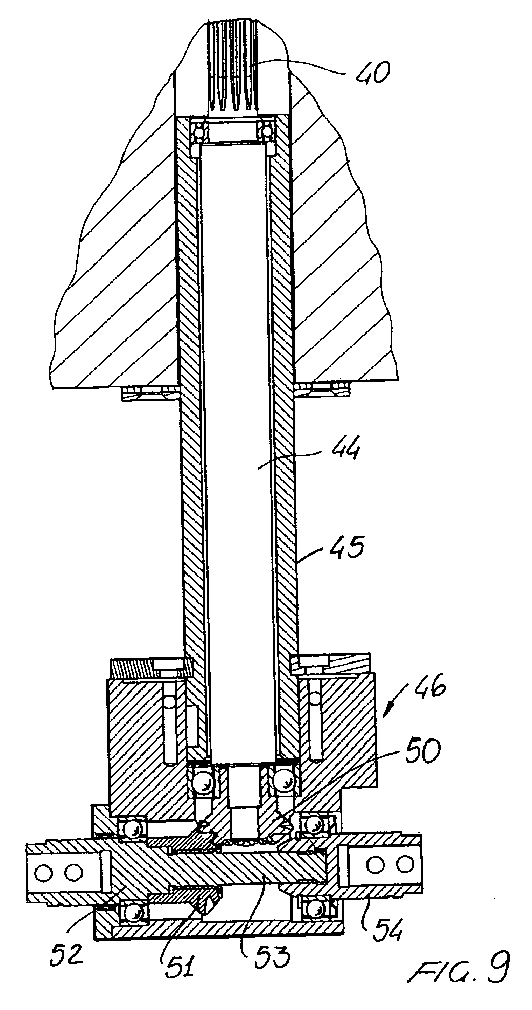

The horizontal drilling head 46, as is shown in a more detailed manner in Figure 9, is provided with a conical gear 50, coupled to the driving shaft 44, and meshing with a second conic or bevel gear 51.

The latter is keyed on a horizontal drilling mandrel 52, which is rotatably supported by the drilling head and is provided with an end-piece 53 which is in turn supported by a supporting nut 54.

With the above disclosed arrangement, as the horizontal drilling mandrel is lowered to a working position thereof, the engagement of the pin 48 and top end portion of the cut-out 47 will provide a very stable coupling eliminating any clearances, thereby the machine can perform a very accurate machining.

Moreover, the engagement of the pin and of the cut-out will operate as a guide element to prevent any rotary movements against the vertical axis of the horizontal drilling head.

From the above disclosure it should be apparent that the invention fully achieves the intended aim and objects.

In particular, the fact is to be pointed out that a drilling assembly has been provided which, by very simple means, allows to firmly locate at their working positions both the vertical mandrels and the horizontal mandrels.

The invention as disclosed is susceptible to several modifications and variations, all of which will come within the invention scope, as defined in the appended claims.

Moreover, all of the constructional details can be replaced by other technically equivalent elements.

In practicing the invention, the used materials, as well as the contingent size and shapes, can be any, depending on requirements.

## Claims

1. A drilling assembly, specifically designed for panel milling and drilling machines, comprising a plurality of vertical drilling mandrels (2) and horizontal drilling mandrels (3), whereby each said vertical drilling mandrels (2) comprises a slotted shaft (10) slidably engaged with a driving gear (11) and that said slotted shaft is coupled, at a bottom portion thereof, to a drill holding mandrel (17), **characterized in that** said slotted shaft is coupled at a top portion thereof, to an expanding piston (20) for removably locking the drill holding mandrel at a lowered or working position thereof.

2. A drilling assembly, according to the preceding claim, **characterized in that** said slotted shaft (10) is coupled, at a bottom portion thereof, to a shaft (15) which is rotatably supported by a first bottom bushing (16) also supporting said drill holding mandrel (17).

3. A drilling assembly, according to one of the preceding claims, **characterized in that** said expanding piston (20) comprises a piston body (32) coupled to said slotted shaft and engageable in a first top sleeve (30), and that said expanding piston is coupled, at a top portion thereof to a piston rod (21) in turn coupled to a first driving cylinder (22).

4. A drilling assembly, according to claim 3, **characterized in that** said sleeve (30) is provided, at a bottom end portion thereof, with a locking enlarged portion (31) for locking said expanding piston.

5. A drilling assembly, according to one of the preceding claims, **characterized in that** the expanding piston comprises a piston body coupled to the slotted shaft and ending with a conical tapering portion (33), and that, inside said conical tapering portion is provided a guide seat of a counter-conic element (35) delimiting, with said conic tapering portion, a groove in which a split ring (37) is engaged, said split ring being adapted to be radially expanded in said enlarged portion (31) under a pushing by said piston rod, a pulling force on said counter-conic elment causing a partial disengaging of the counter-conic element from said conic tapering portion, thereby causing said split ring to be radially contracted and disengaged from said enlarged portion.

6. A drilling assembly, according to one of the preceding claims, **characterized in that** said driving gear meshes with a gear chain coupled to a motor.

7. A drilling assembly, according to one of the preceding claims, **characterized in that** said horizontal drilling mandrel (3) is provided with a slotted shaft (40) coupled, at a bottom portion thereof, to a drive shaft (44) rotatably supported inside a second bottom bushing (45) supporting the horizontal drilling head, and that the second bottom bushing is provided with a flat surface portion and therein is engaged a tempered pin (48) designed for operating as a limit element for the locating, during a working operation, of said horizontal drilling mandrel.

8. A drilling assembly, according to claim 7, **characterized in that** the second slotted shaft (40) is coupled, at the top portion thereof, to a body in turn coupled, through a second stem (42), to a horizontal drilling mandrel driving cylinder (43).

9. A drilling assembly, according to one of the preceding claims 7 or 8, **characterized in that** said slotted shaft (40) is coupled to a first conical gear (50), rotatably supported by said head and operatively coupled to a drill holding mandrel (52).

## Patentansprüche

1. Bohreinrichtung, welche insbesondere für Maschinen zum Fräsen und Bohren von Platten bestimmt ist und eine Mehrzahl von vertikalen Bohrdornen (2) und horizontalen Bohrdornen (3) umfasst, wobei jeder vertikale Bohrdorn (2) eine geschlitzte Welle (10) umfasst, welche mit einem Antriebsrad (11) verschiebbar in Eingriff ist, und dass die geschlitzte Welle an einem unteren Abschnitt davon mit einem Bohrerhaltedorn (17) verbunden ist und wobei die geschlitzte Welle an einem oberen Abschnitt davon mit einem Expansionskolben (20) zum lösbaren Verriegeln des Bohrerhaltedorns an einem gesenkten oder Arbeitsabschnitt davon verbunden ist.

2. Bohreinrichtung nach dem vorhergehenden Anspruch, **dadurch gekennzeichnet, dass** die geschlitzte Welle (10) an einem unteren Abschnitt davon mit einer Welle (15) verbunden ist, welcher durch eine erste untere Buchse (16), welche auch den Bohrerhaltedorn (17) aufnimmt, drehbar aufgenommen wird.

3. Bohreinrichtung nach einem der vorhergehenden Ansprüche, **dadurch gekennzeichnet, dass** der Expansionskolben (20) einen Kolbenkörper (32) umfasst, welcher mit der geschlitzten Welle verbunden ist und mit einer ersten oberen Hülse (30) in Eingriff gebracht werden kann, und dass der Expansionskolben an einem oberen Abschnitt davon mit einer Kolbenstange (21) verbunden ist, welche wiederum mit einem ersten Antriebszylinder (22) verbunden ist.

4. Bohreinrichtung nach Anspruch 3, **dadurch gekennzeichnet, dass** die Hülse (30) an einem unteren Endabschnitt davon mit einem erweiterten Verriegelungsabschnitt (31) zum Verriegeln des Expansionskolbens versehen ist.

5. Bohreinrichtung nach einem der vorhergehenden Ansprüche, **dadurch gekennzeichnet, dass** der Expansionskolben einen Kolbenkörper umfasst, welcher mit der geschlitzten Welle verbunden ist und mit einem konisch zulaufenden Abschnitt (33) endet, und dass innerhalb des konisch zulaufenden Abschnitts eine Führungsaufnahme eines gegenkonischen Elements (35), welches mit dem konisch zulaufenden Abschnitt eine Nut begrenzt, in welche ein Spaltring (37) eingreift, vorgesehen ist, wobei der Spaltring so ausgelegt ist, dass er unter einem Schub durch die Kolbenstange in dem erweiterten Abschnitt (31) radial ausgedehnt wird, wobei eine Zugkraft auf das gegenkonische Element eine teilweise Lösung des gegenkonischen Elements aus dem konisch zulaufenden Abschnitt bewirkt, wodurch bewirkt wird, dass der Spaltring radial zusammengezogen wird und sich aus dem erweiterten Abschnitt löst.

6. Bohreinrichtung nach einem der vorhergehenden Ansprüche, **dadurch gekennzeichnet, dass** das Antriebsrad in eine Zahnkette eingreift, welche mit einem Motor verbunden ist.

7. Bohreinrichtung nach einem der vorhergehenden Ansprüche, **dadurch gekennzeichnet, dass** der horizontale Bohrdorn (3) mit einer geschlitzten Welle (40) versehen ist, welche an einem unteren Abschnitt davon mit einer Antriebswelle (44) verbunden ist, die innerhalb einer zweiten unteren Buchse (45), welche den horizontalen Bohrkopf aufnimmt, drehbar aufgenommen wird, und dass die zweite untere Buchse mit einem Abschnitt mit ebener Fläche versehen ist und darin ein gehärteter Stift (48) eingreift, welcher dazu bestimmt ist, als ein Begrenzungselement zum Arretieren des horizontalen Bohrdorns während des Arbeitsbetriebs zu fungieren.

8. Bohreinrichtung nach Anspruch 7, **dadurch gekennzeichnet, dass** die zweite geschlitzte Welle (40) an einem oberen Abschnitt davon mit einem Körper verbunden ist, welcher durch einen zweiten Schaft (42) wiederum mit einem Zylinder (43) verbunden ist, der den horizontalen Bohrdorn antreibt.

9. Bohreinrichtung nach einem der vorhergehenden Ansprüche 7 oder 8, **dadurch gekennzeichnet, dass** die geschlitzte Welle (40) mit einem ersten Kegelrad (50) verbunden ist, welches durch den Kopf drehbar aufgenommen wird und mit einem Bohrerhaltedorn (52) funktionsfähig verbunden ist.

## Revendications

1. Dispositif de perçage, spécifiquement étudié pour fraiser des plaques et pour des perceuses, comprenant une pluralité de mandrins verticaux de perçage (2) et de mandrins horizontaux de perçage (3), dans lequel chaque mandrin vertical (2) comprend un arbre rainuré (10) engagé de manière coulissante par un engrenage d'entraînement (11) et dans lequel ledit arbre rainuré est couplé, à une partie inférieure de celui-ci, à un mandrin (17) retenant un foret, **caractérisé en ce que** ledit arbre rainuré est couplé, à une partie supérieure de celui-ci, à un piston d'allongement (20) pour bloquer de manière amovible le mandrin retenant le foret dans une position basse ou d'usinage de celui-ci.

2. Dispositif de perçage, selon la revendication précédente, **caractérisé en ce que** ledit arbre rainuré (10) est couplé, à une partie inférieure de celui-ci, à un arbre (15) qui est supporté de manière rotative par un premier raccord inférieur (16) supporté aussi par ledit mandrin (17) retenant le foret

3. Dispositif de perçage, selon l'une quelconque des revendications précédentes, **caractérisé en ce que** ledit piston d'allongement (20) comprend un corps de piston (32) couplé audit arbre rainuré et engageable dans un premier manchon supérieur (30), et **en ce que** ledit piston d'allongement est couplé, à une partie supérieure de celui-ci, à une barre de piston (21) à son tour couplée à un premier cylindre d'actionnement (22).

4. Dispositif de perçage, selon la revendication 3, **caractérisé en ce que** ledit manchon (30) est muni, à une partie d'extrémité inférieure de celui-ci, d'une partie élargie de blocage (31) pour bloquer ledit piston d'allongement.

5. Dispositif de perçage, selon l'une quelconque des revendications précédentes, **caractérisé en ce que** ledit piston d'allongement comprend un corps de piston couplé à l'arbre rainuré et se terminant par une partie effilée conique (33 et **en ce que**, à l'intérieur de ladite partie effilée conique, un logement de guidage constitué d'un élément contre-conique est prévu, délimitant, avec ladite partie conique effilée, une rainure dans laquelle une bague à fente (37) est engagée, ladite bague à fente étant adaptée pour être étendue radialement dans ladite partie élargie (31) par une poussée de ladite barre de piston, une force de traction sur ledit élément contré-conique provoquant un désengagement partiel de l'élément contre-conique de ladite partie conique effilée, de ce fait provoquant la contraction radiale de la bague à fente et son désengagement de ladite partie élargie.

6. Dispositif de perçage, selon l'une quelconque des revendications précédentes, **caractérisé en ce que** ledit engrenage d'actionnement s'engrène avec une courroie d'engrenage couplée à un moteur.

7. Dispositif de perçage, selon l'une quelconque des revendications précédentes, **caractérisé en ce que** ledit mandrin horizontal de perçage (3) est muni d'un arbre rainuré (40) couplé, à une partie supérieure de celui-ci, à un arbre d'actionnement (44) supporté de manière rotative à l'intérieur d'un second raccord inférieur (45) supportant la tête de perçage horizontale, et **en ce que** le second raccord inférieur est muni d'une surface plate et dans lequel est engagée une broche de retenue ("tempered pin") (48) désignée pour agir comme un élément limite pour positionner, lors d'une opération d'usinage, ledit mandrin horizontal de perçage.

8. Dispositif de perçage, selon la revendication 7, **caractérisé en ce que** le second arbre rainuré (40) est couplé, à une partie supérieure de celui-ci, à un corps à son tour couplé, par une seconde tige (42), à un cylindre (43) entraînant le mandrin horizontal de perçage.

9. Dispositif de perçage, selon l'une quelconque des revendications 7 ou 8, **caractérisé en ce que** ledit arbre rainuré (40) est couplé à un premier engrenage conique (50), supporté de manière rotative par ladite tête et couplé de manière active à un mandrin (52) retenant le foret.
